# EUROPEAN PATENT APPLICATION

(11) **EP 3 995 438 A1**
(43) Date of publication of application: **11.05.2022**
(21) Application number: 21206630.2
(22) Date of filing: 05.11.2021
(51) Int. Cl.: B66F 9/12, B66F 9/18

(54) **METHOD FOR TRANSPORTING FLEXIBLE SHEETS AND LIFTING ARRANGEMENT THEREOF**

(30) Priority: 09.11.2020 FI 20206127
(71) Applicant: AMADA AUTOMATION EUROPE OY, 68910 Pännöinen (FI)
(72) Inventor: Carstensen, Hauke, 68910 Pännäinen (FI); Grankvist, Marcus, 68910 Pännäinen (FI)
(74) Representative: Kolster Oy Ab

(57) **Abstract**

The present invention relates to a method for the transport of flexible sheets (100) and a lifting arrangement (109) to carry out the said method. This allows the flexible sheet to take on an arc shape (50) during a transport thereof. The curvature centre (O) of such an arc shape is designed to be located in a plane of symmetry (106) extending substantially along a centre line (107) of a surface plane (108) of the flexible sheets and perpendicular to its intended direction of transport. The symmetry plane is arranged to be located in a vertical plane that is coincident with the centre line.

## Description

### Technical area

The present invention relates to a method of the kind indicated in the preamble of claim 1. With this method, flexible discs can be transported unhindered.

The invention also applies to a lifting arrangement according to the preamble of claim 8 for carrying out the said method.

### Prior art

Plates and other sheets that are processed in different ways are usually delivered on a pallet of some kind to facilitate transportation and protect the material from damage. To make space use more efficient, the supporting pallet is often removed before interim storage and before the plate is processed. This is not a problem when handling sheets with sufficient inherent structural rigidity. Such sheets can be transported without problems, for example, by a truck's regular transport forks.

However, thin flexible sheets have a significantly lower rigidity and are thus difficult to handle without a special support, such as the pallet on which it is delivered. As a consequence of this inferior rigidity, the sheets are usually bent over the transport forks, making them difficult to place at their destination, be it a storage compartment or a processing machine.

When these flexible sheets bends, there is also a risk that they may slip off the transport forks, which poses a safety risk when transporting the sheets.

Depending on the rigidity and size of the material, the problems arise at different dimensions. For example, for steel sheets, the above-described problems arise when the thickness of the sheet is less than about 3 mm and the length of the sheet is 3 m or more.

A generally accepted way to handle these flexible sheets today is to utilise several parallel transport forks, such as 4 forks. Such solutions are currently marketed as both adjustable and fixed models. The problem with these solutions is that they are costly, as they are subject to high technical requirements because they are considered lifting equipment. In addition, it is often difficult to position sheets lifted with several forks, as they are more likely to collide with various devices.

### Presentation of the problem

With the present invention, the problems with which prior art solutions are associated can be substantially avoided. In this respect, the invention provides an easy-to-use and affordable device with which flexible sheets can be transported in a unique way.

The invention thus describes a method in accordance with the characteristics presented in patent claim 1. The invention further describes a lifting arrangement in accordance with the characteristics presented in patent claim 8.

The respective subsequent dependent patent claims indicate suitable developments or variants of the invention which further improve its function.

The invention is based on the idea of achieving a temporary bending in the flexible sheet, without making these shape changes permanent. The bending of the flexible sheet makes it inherently rigid and is the key to improved manageability.

For the purposes of this invention, the term "flexible sheet" means sheet-shaped elements which, because of their material and/or dimensions, tend to bend more or less uncontrollably. Such materials are, for example, thin metal sheets, thin wood or wood fibre boards, thin polymer products or equivalent.

Furthermore, for the purposes of the following description, the terms "above", "under" and so on refer to the lifting arrangement or its design details as shown in the attached figures.

The lifting arrangement described in the present invention achieves several significant advantages over prior art technology. Thus, a lifting arrangement according to the present invention makes it easier and faster to transport flexible sheets. This avoids damage to the material being transported, but also avoids damage that sheets can cause when they fall off the forklift forks.

The solution provides a low-cost device that is easy to use. The inventive solution is much lighter and less space-intensive than previous transport tools.

If bending of the flexible sheet is carried out by means of a special device mounted on existing forklift forks, the device cannot be classified as an active lifting accessory, which keeps the manufacturing costs of the device low.

Further advantages and details of the invention are more closely set out in the description below.

### Summary of drawing figures

In the following, the invention is described more closely with reference to the drawing, in which
Figure 1 shows a flowchart illustrating the present method,
Figure 2 shows a depalleting station,
Figure 3 shows the function of a depalleting station as shown in Figure 2,
Figure 4 shows an alternative design of the depalleting station,
Figure 5 shows a flexible sheet in its intended curved transport form,
Figure 6 shows a first embodiment of a lifting arrangement with a concave support surface, comprising dedicated arc-shaped forklift forks,
Figure 7 shows a second embodiment of a lifting arrangement with concave support surface, to be mounted on a single forklift,
Figure 8 shows a longitudinal section of a lifting arrangement as shown in Figure 7,
Figure 9 shows a third embodiment of a lifting arrangement, this one with a convex support surface, to be mounted on a single forklift fork,
Figure 10 shows a fourth embodiment of a lifting arrangement with a concave support surface, to be fitted to a single forklift fork,
Figure 11 shows a longitudinal section of a lifting arrangement as shown in Figure 12,
Figure 12 shows a fifth embodiment of a lifting arrangement to design a concave support surface and to be fitted to a single forklift fork,
Figure 13 shows a sixth embodiment of a lifting arrangement with a concave support surface, to be fitted to two parallel forklift forks, and
Figure 14 shows a seventh embodiment of a lifting arrangement with concave and multi-part support surface, to be mounted over at least two parallel forklift forks.

### Preferred embodiments

The above figures do not show the lifting arrangement to scale but are only intended to illustrate the function of these designs. In this respect, the structural parts shown in the attached figures and identified by reference numbers correspond to the design solutions presented in the following description.

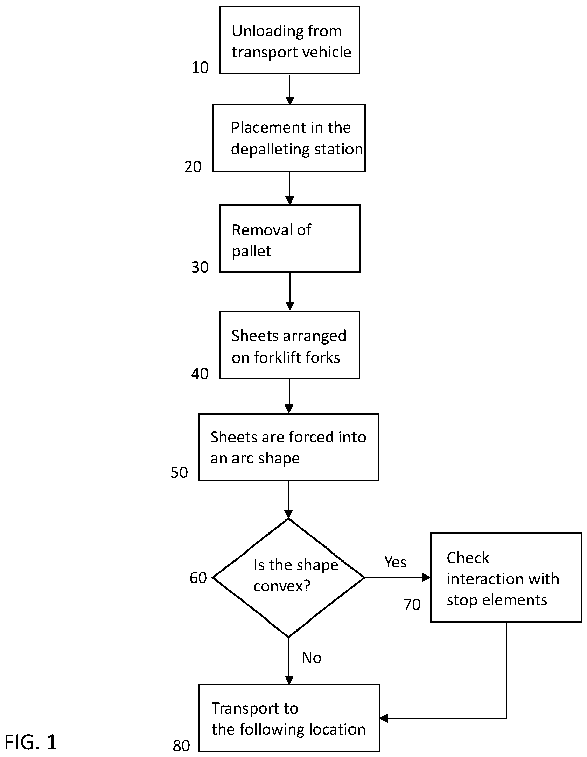

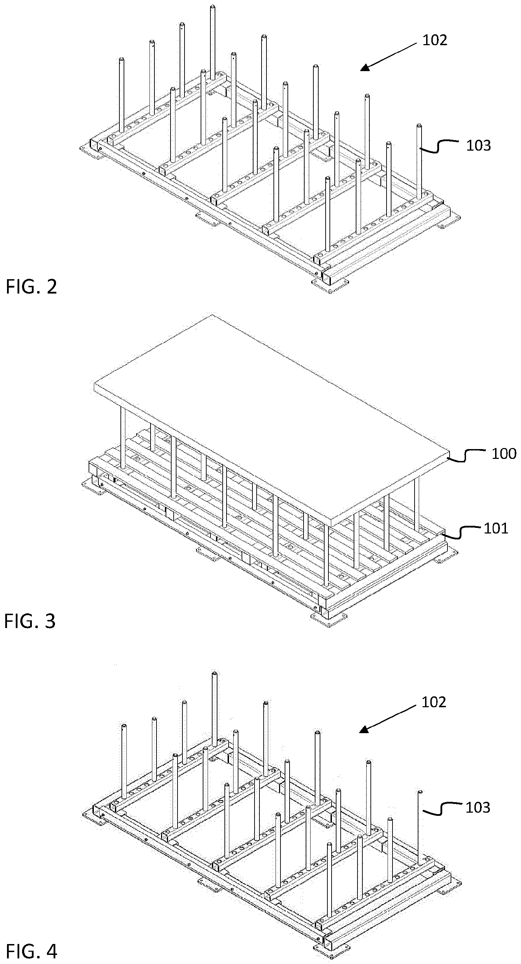

The present method for transporting flexible sheets 100 is illustrated by the flowchart in Figure 1. Thus, during transport in a transport vehicle (not shown), the sheets are usually arranged on different pallets 101 according to their dimensions. The pallets have so far provided transport support and protection for the sheets. When unloading in step 10, the pallets can be retained, but if the sheets are to be further processed, it is more common to remove the pallets in order to make space use more efficient. In the latter case, one starts by placing the pallet with the sheets in a so-called depalleting station 102, step 20, see also Figures 2 and 3. This station exhibits rods 103, or equivalent vertical elements, on which the sheets leave, while the pallet falls down between the rods, step 30.

From the depalleting station 102, the sheets 100 are transported to the following destination by lifting them with forklift forks, step 40. If the sheets are sufficiently rigid, this transport does not pose a problem, but if the sheets are flexible, they should be supported in some way during transport so as not to be damaged or fall off the forklift forks.

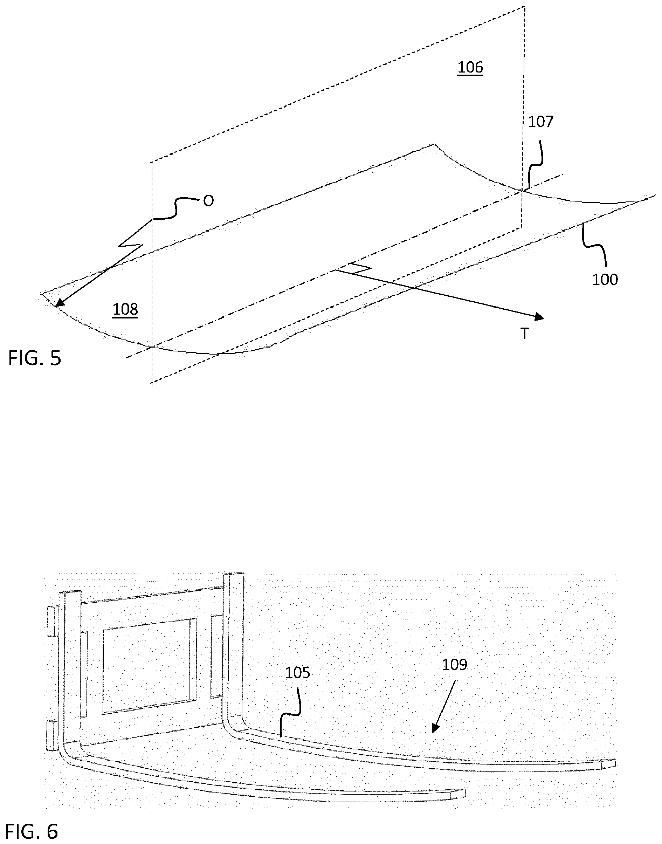

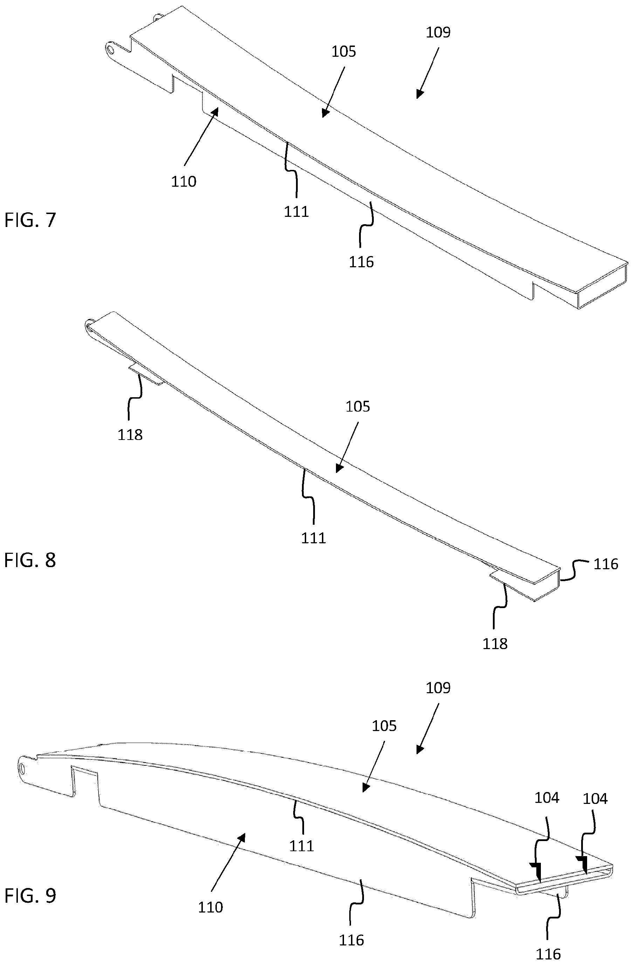

In the present method, the flexible sheet 100 is therefore made to take on an arc shape, step 50, during its transport to its destination in step 80. During transport, the sheet may take on an arc shape which is concave in the horizontal plane, as shown in Figure 5. Such a sheet - or such sheets - is/are relatively stable on the forklift forks and can thus be transported to the destination thereof without further intervention. On the other hand, if the sheet(s) take on a convex arc shape with respect to the horizontal plane, step 60, it is advantageous to restrict the freedom of movement of the sheet(s) with, for example, one or more stop elements 104, according to step 70, see also Figure 9, in order to prevent the sheet(s) from sliding off the forklift forks during their transport to the destination, step 80. Such stops can be, for example, stationary stops, adjustable screw clamps or quick-release clamps.

To force the flexible sheet 100 to take on an above symmetrical arc shape, for example, a circular or parable arc, the forklift forks are fitted with a uniform or divided supporting plane 105, such that a centre of curvature 0 of the arc shape of the sheet is designed to lie in a plane of symmetry 106 extending substantially along a centre line 107 of a surface plane 108 exhibited by the flexible sheet 100 and perpendicular to its intended direction of transport T. See Figure 5. This centre of curvature may lie in a vertical plane coincident with the centre line both above and below the transported sheet, wherein the sheet will exhibit a concave or convex shape relative to its centre axis, depending on whether the centre of curvature lies above or below the sheet.

The supporting plane 105 favourably exhibits a regular shape, exemplified by the shape of a circular or parable arc, but is not limited to these alone.

It is also possible to give the sheet(s) a preliminary arc shape already in the depalleting station 102, which can then take on an embodiment shape in accordance with Figure 4. In this context, the length of the depalleting station rods 103 may vary so that, for example, the rods along the centre of the station are shorter than the rods along the outer long sides of the station. The station's rods can of course also be adjustable or interchangeable to achieve this design.

The arc-shaped supporting plane of the forklift forks used in the transport of the sheets can be obtained in a number of different ways, of which a number of preferred embodiments are described below.

In a first advantageous embodiment, forklift forks are manufactured exclusively dedicated to the transport of flexible sheets. Such forklift forks form in themselves at least two mainly symmetrical lifting arrangements 109 that exhibit an arc-shaped longitudinal cross-section. The curvature centre of the arc shape is preferably arranged to be above the supporting plane 105 formed by the top surface of the forklift forks when the forks are in use. Such an embodiment is shown in Figure 6.

It is also possible to provide normal straight forklift forks with special devices that maintain a curved shape of the flexible sheet as it is moved from the depalleting station 102 to storage or on to the next process step. Such lifting arrangements 109, as shown in Figures 7 to 14, show a frame 110 and at least one supporting element 111, which is arranged to form the arc-shaped supporting plane 105 in this frame. In order to obtain as safe a transport as possible, the centre of curvature of the said arc shape is arranged in a vertical plane intended to substantially halve the cross-section of the frame in the intended direction of transport of the lifting arrangement T. The supporting plane will thus be designed to be substantially symmetrical with respect to this frame cross-section. This supporting plane can be obtained by arranging an upper surface of the frame of the lifting arrangement to deviate from a horizontal plane, but also by arranging said upper surface 112 of said frame to exhibit regularly projecting support portions 111 in the form of separate support elements.

Thus, in figures 7 and 8, a second beneficial embodiment of the lifting arrangement 109 is shown with a simple and economically advantageous construction. In this embodiment, the supporting plane will comprise at least two subplanes formed by lifting arrangements fitted on each of the forklift forks. For this lifting arrangement, the frame 110 comprises at least two substantially parallel flanges 116, and the supporting plane 105 is formed by a sheet-shaped and substantially regular in the horizontal plane concave support portion 111 fitted in the longitudinal direction of the flanges. The flanges together with the sheet-shaped support portion form a substantially open U-shaped structure below the supporting plane and opposite its centre of curvature, the parallel flanges being connected to each other by at least one transverse bar 118 at the opposite ends of the frame. In this respect, the lifting arrangement will mainly support itself against the top of the forklift forks via said transverse bars.

Figure 9 shows a third preferred embodiment of a lifting arrangement 109 which, like the embodiment above, includes a supporting plane formed by at least two subplanes consisting of lifting arrangements fitted on each of the forklift forks. The lifting arrangement exhibits a frame 110 with at least two substantially parallel flanges 116. In contrast to the embodiment shown in Figures 7 and 8, the supporting plane 105 is formed by a sheet-shaped support portion 111 which is substantially regularly convex in the horizontal plane and is mounted in the longitudinal direction of the flanges. The flanges, together with the sheet-shaped portion, form an essentially open U-shaped structure below the supporting plane but in the direction of its centre of curvature. The parallel flanges are joined together via at least one crossbar at the opposite ends of the frame, wherein the lifting arrangement will mainly support itself against the top of the forklift forks via said crossbars. This embodiment is advantageously provided with stop elements 104, by which the flexible sheet 100 can be supported in or fixed to the lifting arrangement 109.

The open U-shaped structure with appropriate crossbars 118, described above with reference to Figures 7 to 9, can of course be replaced by a structure in which the frame is formed by at least one pipe-shaped device extending in the direction of the arc of the supporting plane and in which the support portion 111 forming the supporting plane is mounted to this device by at least two longitudinal parallel flanges.

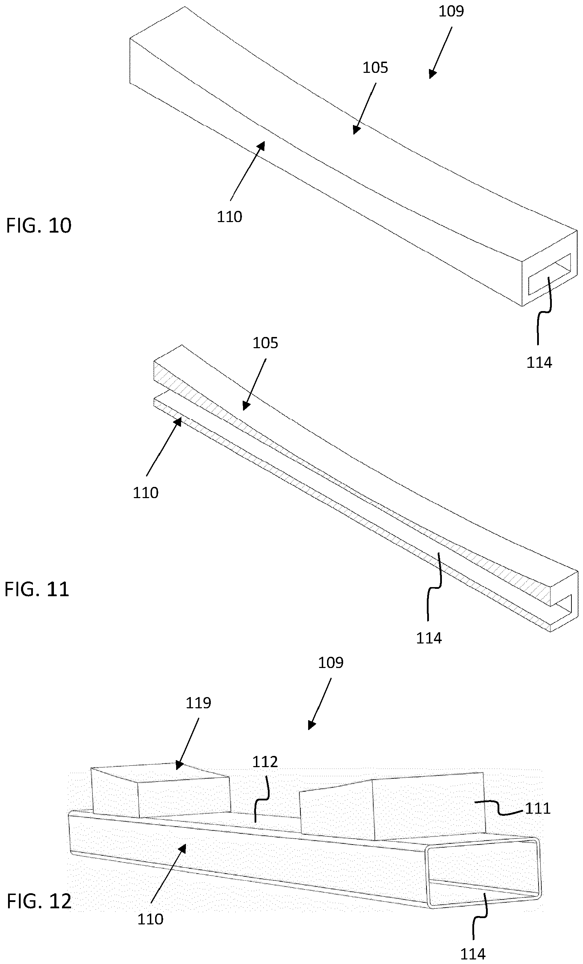

Figures 10 and 11 show a fourth preferred embodiment of a lifting arrangement 109 where the frame 110 is advantageously has a solid form, with the exception of a mounting channel 114 that pierces the structure. The frame may be made of a mouldable polymeric material in which the desired supporting plane 105 is designed, convex or concave in the horizontal plane. Figures 10 and 11 show a concave supporting plane.

Figure 12 shows a fifth preferred embodiment of a lifting arrangement 109 in which the supporting plane 105 is formed by support portions 111 arranged to protrude substantially regularly from their frame's 110 top surface 112. In this respect, the support elements advantageously exhibit chamfered contact surfaces 119, which together will form the supporting plane 105, which is substantially symmetrically arc-shaped with respect to the cross-section of the frame in the intended direction of transport of the lifting arrangement.

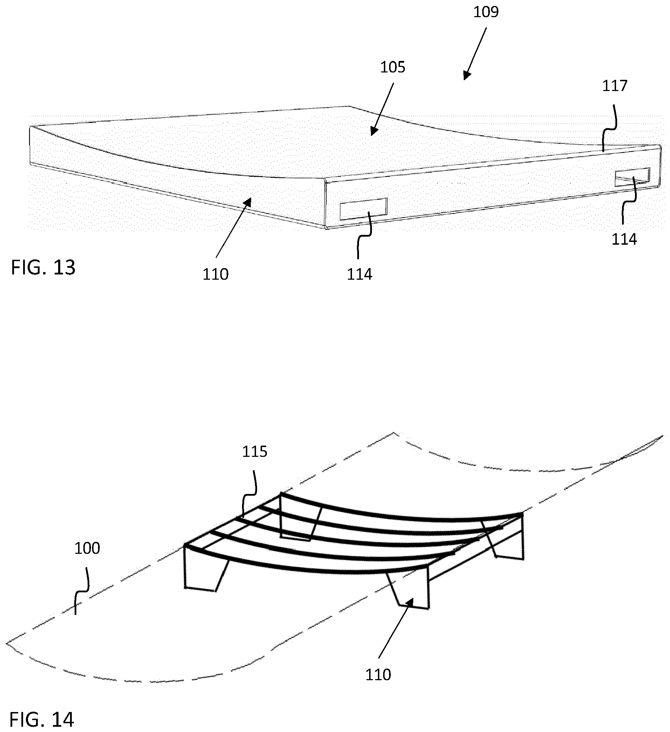

While Figures 7 to 12 show embodiments where the supporting plane comprises at least two subplanes formed by lifting arrangements mounted on each of the forklift forks, Figure 13 shows an embodiment with a uniform larger support area 105. This lifting arrangement is arranged to be mounted to two parallel forklift forks.

The sixth advantageous embodiment shown in Figure 13 thus includes a lifting arrangement 109 in which the frame 110 is advantageously has a solid form, with the exception of the mounting ducts 114 that pierce the structure. The frame may be made of a mouldable polymeric material in which the desired uniform supporting plane 105 is formed, convex or concave in the horizontal plane. The present embodiment shows a concave supporting plane.

Finally, Figure 14 shows a seventh preferred embodiment in which the supporting plane 105 is formed by several essentially parallel rods 115. The rods are mounted to a common frame 110, which can, for example, consist of parallel flanges 116 as shown in Figure 7. The frame may also consist of solid-cast devices similar to the frame in Figure 13. The rods are preferably arranged so that they extend in the direction of the arc-shape of the supporting plane, in accordance with Figure 14, but the rods can also be arranged with an extension perpendicular to the arc-shape of the supporting plane. A more uniform supporting surface is obtained with rods arranged in a grid structure.

The description above and the figures cited therein are intended only to illustrate the present solution for the construction of a lifting arrangement. Thus, the solution is not limited solely to the embodiment described above or in the attached patent claims. Indeed, within the idea described in the attached patent claims, several variations or alternative embodiments are possible.

## Claims

1. Method for the transport of flexible sheets (100) by means of two parallel forklift forks, **characterised in that**:
a flexible sheet (100) during a transport thereof is temporarily brought to take on an arc shape (50), wherein:
the curvature centre of said arc shape is designed to be located in a plane of symmetry (106) extending substantially along a centre line (107) of a surface plane (108) of the flexible sheet and perpendicular to its intended direction of transport (T), whereby:
said symmetry plane is arranged to be within a vertical plane that coincides with the centre line.

2. Method for the transport of flexible sheets (100) according to claim 1, **characterised in that** the flexible sheet (100) is arranged on a supporting plane (105), where at least one support portion (111) forms said symmetrical arc shape.

3. Method for the transport of flexible sheets (100) according to claim 2, **characterised in that** the supporting plane (105) is arranged to include a substantially uniform plane.

4. Method for the transport of flexible sheets (100) according to claim 2, **characterised in that** the supporting plane (105) is arranged to include from a frame (110) regularly protruding support portions (111).

5. Method for the transport of flexible sheets (110) according to one of the claims 2 to 4, **characterised in that** the supporting plane (105) is formed as a concave surface in the horizontal plane.

6. Method for the transport of flexible sheets (100) according to one of the claims 2 to 4, **characterised in that** the supporting plane (105) is formed as a convex surface in the horizontal plane.

7. Method for the transport of flexible sheets (100) according to claim 6, **characterised in that** a stop element (104) is arranged to be adjacent to the supporting plane (105).

8. Lifting arrangement (109) for the transport of flexible sheets (100) with two parallel forklift forks, **characterised in that** the lifting arrangement exhibits:
a frame (110),
at least one support portion (111) arranged to form a substantially symmetrical arc-shaped supporting plane (105) in the frame,
wherein the curvature centre of said arc shape is arranged in a plane of symmetry (106) intended to substantially halve the cross-section of the frame (110) in the intended direction of transport of the lifting arrangement (109).

9. Lifting arrangement (109) according to claim 8, **characterised in that** the supporting plane (105) comprises a top surface (112) of the said frame (110), which top surface is arranged to deviate from a horizontal plane.

10. Lifting arrangement (109) according to claim 8, **characterised in that** the supporting plane (105) comprises from a top surface (112) of said frame (110), regularly protruding support portions (111) in the form of separate support elements.

11. Lifting arrangement (109) according to one of claims 8 to 10, **characterised** int that the supporting plane (105) forms a concave surface in the horizontal plane.

12. Lifting arrangement (109) according to one of claims 8 to 10, **characterised in that** the supporting plane (105) forms a convex surface in the horizontal plane.

13. Lifting arrangement (109) according to claim 12, **characterised in that** the lifting arrangement (109) exhibits at least one to the supporting plane (105) adjacent stop element (104).

14. Lifting arrangement (109) according to one of claims 8 to 13, **characterised in that** the supporting plane (105) covers a uniform surface area.

15. Lifting arrangement (109) according to one of claims 8 to 13, **characterised in that** the supporting plane (105) comprises two or more subplanes.
